# EUROPEAN PATENT SPECIFICATION

(11) **EP 3 715 100 B1**
(45) Date of publication and mention of the grant of the patent: **12.10.2022**
(21) Application number: 18880912.3
(22) Date of filing: 26.06.2018
(51) Int. Cl.: B29D 30/24, B29D 30/26

(54) **TIRE MOLDING DEVICE**
REIFENFORMVORRICHTUNG
DISPOSITIF DE MOULAGE DE PNEU

(30) Priority: 24.11.2017 JP 2017226093
(43) Date of publication of application: 30.09.2020
(73) Proprietor: Bridgestone Corporation, Tokyo 104-8340 (JP)
(72) Inventor: IYANAGI Satoshi, Tokyo 104-8340 (JP)
(74) Representative: Marks & Clerk LLP
(86) International application number: PCT/JP2018/024229
(87) International publication number: WO 2019/102638

(56) References cited:
- WO-A1-2007/135706
- JP-A- H07 195 569
- JP-A- 2000 000 899
- JP-A- 2000 000 899
- JP-A- 2001 232 693
- JP-A- 2006 116 820
- US-A1- 2015 059 984

## Description

### TECHNICAL FIELD

The present disclosure relates to a tire molding device.

### BACKGROUND

Heretofore, in a tire molding step of assembling unvulcanized tire members to form a raw tire, there has been known, for example, a tire molding device described in Patent Literature 1, specifically a tire molding device including a rotatable hollow cylindrical spindle, and one side drum body and the other side drum body that are fitted in one side outer portion and the other side outer portion of the spindle in a slidable contact manner to be movable in an axial direction of the spindle.

In this tire molding device, a screw shaft coaxial with the spindle is inserted in a hollow portion of the spindle, and by rotation of the screw shaft, the one side drum body and the other side drum body are moved by an equal distance in opposite directions along an axial direction of the spindle, to move both the drum bodies close to and away from each other.

### CITATION LIST

### Patent Literature

PTL 1: Japanese Patent Laid-Open No. 1995-024930
PTL 2: JP 2000 000899 A.

### SUMMARY

### (Technical Problem)

In recent years, for example, achievement of efficiency in maintenance of a tire molding device has been sought, and simplification of a structure of the device or the like has been desired.

Furthermore, in a case where both drum bodies, consequently both half drums including both the drum bodies are supported by a spindle as in a conventional tire molding device, loads of both the half drums are applied to the spindle. The half drums have a large difference in weight in accordance with a rim size of a tire to be molded, and a deflection amount of the spindle changes for each half drum for use. Therefore, centering accuracy of the device tends to decrease. PTL 2 discloses a tire molding device having similar features to the preamble of independent claim 1.

To solve the problem, an object of the present disclosure is to provide a tire molding device including a simple structure and having an improved centering accuracy.

### (Solution to Problem)

(1) A tire molding device of the present disclosure to solve the above problems is a tire molding device to mold an unvulcanized tire, including a spindle, and a drum mechanism disposed on an outer peripheral side of the spindle, wherein the drum mechanism includes a first half drum fixed on one end side of the spindle, and a second half drum that is not supported by the spindle and is connected to the spindle closer to the other end side of the spindle than the first half drum, the spindle moves along an axial direction of the spindle, and the second half drum moves relative to the spindle along the axial direction of the spindle.

Note that when the above second half drum "is not supported by the spindle and is connected to the spindle", it is meant that a load of the second half drum is not substantially applied to the spindle.

### (Advantageous Effect)

The present disclosure can provide a tire molding device including a simple structure and having an improved centering accuracy.

### BRIEF DESCRIPTION OF THE DRAWINGS

In the accompanying drawings:
FIG. 1 is a schematic side surface view of a tire molding device according to an embodiment of the present disclosure, illustrating a state where a first half drum is disposed away from a second half drum;
FIG. 2 is a schematic side surface view illustrating the tire molding device illustrated in FIG. 1 in a state where the first half drum is disposed close to the second half drum; and
FIG. 3 is a schematic side surface view illustrating a tire molding device according to another embodiment of the present disclosure.

### DETAILED DESCRIPTION

Hereinafter, embodiments of a tire molding device according to the present disclosure will be illustratively described with reference to the drawings.

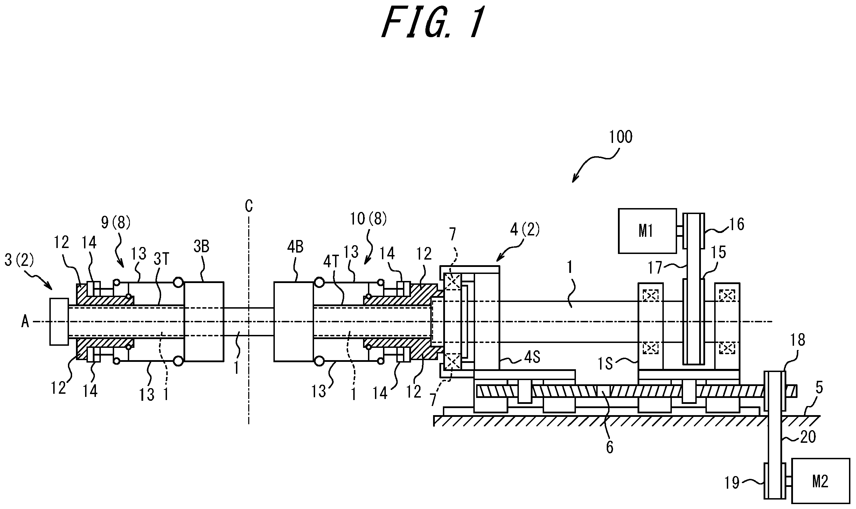

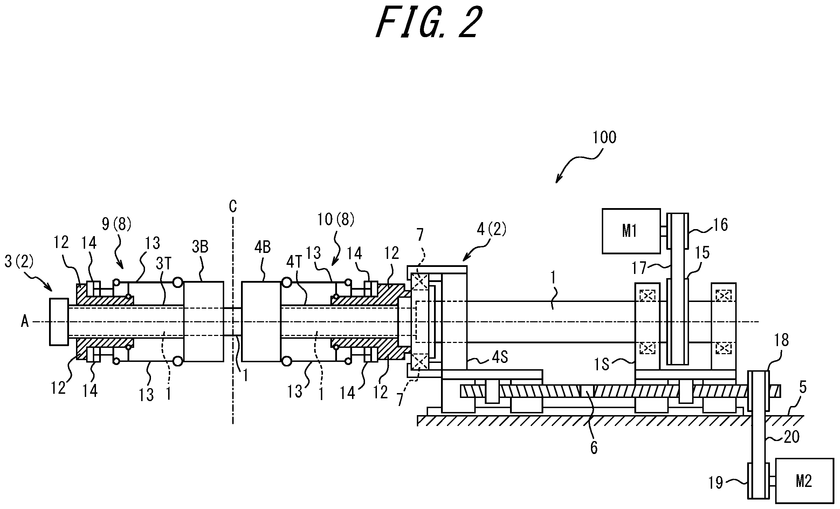

As illustrated in FIG. 1 and FIG. 2, a tire molding device 100 according to the present embodiment is a tire molding device to mold an unvulcanized tire (not illustrated), including a spindle 1, and a drum mechanism 2 disposed on an outer peripheral side of the spindle 1.

The spindle 1 is disposed on a base 5. More specifically, the spindle 1 is not supported on the base 5 on one end side of the spindle (in the drawing, a left side as one faces a paper surface, and hereinafter also referred to as "tip side of the spindle 1") and is supported on the base 5 on the other end side (in the drawing, a right side as one faces the paper surface, and hereinafter also referred to as "a root side of the spindle 1"). That is, the spindle 1 has one side supported on the base 5 on the root side of the spindle 1. In more detail, the spindle 1 has one side supported on the base 5 via a spindle support 1S that is a part of the spindle 1.

Furthermore, the drum mechanism 2 includes a first half drum 3 supported and fixed on one end side (the tip side) of the spindle 1, and a second half drum 4 that is not supported by the spindle and is connected to the spindle 1 closer to the other end side (the root side) of the spindle 1 than the first half drum 3.

The first half drum 3 includes a drum body 3B in which constituent members of the unvulcanized tire are arranged, and a drum cylindrical part 3T extending from the drum body 3B along an axial direction of the spindle 1. The drum body 3B and the drum cylindrical part 3T are integrally formed.

The second half drum 4 includes a drum body 4B in which constituent members of the unvulcanized tire are arranged, a drum cylindrical part 4T extending from the drum body 4B along the axial direction of the spindle 1, and a drum support 4S supporting the drum body 4B and the drum cylindrical part 4T. The drum body 4B, the drum cylindrical part 4T and the drum support 4S are integrally formed.

Note that the second half drum 4 also has one side of the second half drum 4 supported on the base 5 on the root side of the spindle 1 in the same manner as with the spindle 1. In more detail, the second half drum 4 has one side supported on the base 5 via the drum support 4S that is a part of the second half drum 4. Thus, the second half drum 4 is not supported by the spindle 1. That is, a load of the second half drum 4 is not substantially applied to the spindle 1.

Note that a support position of the second half drum 4 in the base 5 is closer to the tip side of the spindle 1 than a support position of the spindle 1 in the base 5 is.

The spindle 1 is connected to a first driving source M1 that rotates the spindle 1 about an axis A of the spindle 1, and by a driving force of the first driving source M1, the spindle 1 and the first half drum 3 fixed to the spindle 1 rotate about the axis of the spindle 1.

Furthermore, the spindle 1 is connected to a second driving source M2 that moves the spindle 1 along a direction of the axis A of the spindle 1 (hereinafter, also referred to as "the axial direction"), and by a driving force of the second driving source M2, the spindle 1 and the first half drum 3 fixed to the spindle 1 move along the axial direction of the spindle 1. In other words, the spindle 1 and the first half drum 3 move relative to the second half drum 4 along the axial direction of the spindle 1.

More specifically, the spindle 1 is connected to the second driving source M2 via a first shaft member (in the present embodiment, a right-left ball screw) 6 disposed on the outer peripheral side of the spindle 1, i.e., on the base 5 in an outer part of the spindle 1 and extending along the axis A of the spindle 1. Upon rotation of the first shaft member 6 by the driving force of the second driving source M2, the spindle 1 and the first half drum 3 follow the rotation to move along the axial direction of the spindle 1.

In this way, the first half drum 3 in the present embodiment, together with the spindle 1, rotates about the axis A of the spindle 1, and moves along the axial direction of the spindle 1.

On the other hand, the second half drum 4 is connected to the spindle 1 in a slidable contact manner to move on the spindle 1 in the axial direction of the spindle 1, independently of the spindle 1 and the first half drum 3. That is, the second half drum 4 moves relative to the spindle 1 and the first half drum 3 along the axial direction of the spindle 1. In this way, the second half drum 4 in the present embodiment is not fixed and disposed onto the base 5, and the second half drum 4 also moves relative to the spindle 1 along the axial direction of the spindle 1.

More specifically, the second half drum 4 in the present embodiment is connected to the second driving source M2 via the first shaft member 6 in the same manner as with the spindle 1, and upon the rotation of the first shaft member 6 by the driving force of the second driving source M2, the second half drum 4 follows the rotation to move along the axial direction of the spindle 1.

Note that as described above, the first shaft member 6 in the present embodiment is the right-left ball screw, and threads are provided in opposite orientations on one end side and the other end side of the first shaft member 6. The spindle 1 and the second half drum 4 are connected to the first shaft member 6 at a position where the thread orientations differ from each other, and hence upon the rotation of the first shaft member 6, the spindle 1 together with the first half drum 3, and the second half drum 4 follow the rotation to move opposite to each other along the axial direction of the spindle 1.

Specifically, with the rotation of the first shaft member 6, if a connected position of the spindle 1 and a connected position of the second half drum 4 in the first shaft member 6 are brought close to each other, the first half drum 3 and the second half drum 4 are separated (a state of FIG. 1). Furthermore, if the connected position of the spindle 1 and the connected position of the second half drum 4 in the first shaft member 6 are separated, the first half drum 3 and the second half drum 4 are brought close to each other (a state of FIG. 2).

In this way, upon the rotation of the first shaft member 6 by the second driving source M2, the first half drum 3 and the second half drum 4 move close to and away from each other along the axial direction of the spindle 1. That is, the drum body 3B of the first half drum 3 and the drum body 4B of the second half drum 4 are close to and away from each other along the axial direction of the spindle 1.

Note that in the present embodiment, the threads of the first shaft member 6 are provided in the opposite orientations on one end side and the other end side of the first shaft member 6, but the threads have an identical thread arrangement pitch. Therefore, the first half drum 3 and the second half drum 4 move by an equal distance in opposite directions mutually along the axial direction of the spindle 1.

Additionally, the present disclosure may include a configuration where the second half drum 4 is fixed in the axial direction (i.e., does not move in the axial direction) as long as the second half drum 4 accordingly moves relative to the spindle 1 along the axial direction of the spindle 1 by the spindle 1 moving along the axial direction. In this case, the tire molding device can be further simplified.

Furthermore, the second half drum 4 is connected to the spindle 1 so that at least a part of the second half drum 4 rotates about the axis A of the spindle 1 in synchronization with the rotation of the spindle 1. Specifically, the second half drum 4 in the present embodiment is connected to the spindle 1 via a bearing (in the present embodiment, a slide bearing) 7 between the drum cylindrical part 4T and the drum connecting portion 4S in the second half drum 4. Therefore, in the second half drum 4, the drum cylindrical part 4T and the drum body 4B in the second half drum 4 rotate about the axis A of the spindle 1 in synchronization with the rotation of the spindle 1, but the drum connecting portion 4S of the second half drum 4 does not rotate.

In this way, the second half drum 4 moves relative to the spindle 1 in the axial direction of the spindle 1. On the other hand, at least a part of the second half drum 4 rotates about the axis A of the spindle 1 in synchronization with the spindle 1. Therefore, the second half drum 4 moves relative to the first half drum 3 in the axial direction of the spindle 1. On the other hand, at least a part of the second half drum 4 rotates about the axis A of the spindle 1 in synchronization with the first half drum 3.

Furthermore, the tire molding device 100 according to the present embodiment further includes an arm mechanism 8 on an outer peripheral side of the drum mechanism 2. The arm mechanism 8 includes a first arm part 9 disposed on an outer peripheral side of the drum cylindrical part 3T of the first half drum 3, and a second arm part 10 disposed on an outer peripheral side of the drum cylindrical part 4T of the second half drum 4.

In the present embodiment, the first arm part 9 includes an arm base portion 12 connected to the first half drum 3 (in the present embodiment, the drum cylindrical part 3T of the first half drum 3), arms 13 disposed on the arm base portion 12 to fold and press an unvulcanized tire member (not illustrated), and cylinders 14 that urge an opening operation of the arms 13 (the operation in a radial direction of the spindle 1). Note that in the present embodiment, the arm base portion 12 is a slide bearing.

This configuration is similar to a configuration in the second arm part 10 disposed on an outer peripheral side of the second half drum 4 (in the present embodiment, the drum cylindrical part 4T of the second half drum 4).

However, the arm mechanism is not limited to the configuration.

Furthermore, there are a plurality of arms 13 annularly arranged on an outer peripheral side of each of the first half drum 3 and the second half drum 4, but here, for description, two of a plurality of arms 13 are illustrated in each of the first half drum 3 and the second half drum 4.

Similarly, there are a plurality of cylinders 14 arranged corresponding to the plurality of arms 13, respectively (or the cylinder is annularly disposed as a configuration corresponding to all of the plurality of arms 13), but here, for the description, two of the plurality of cylinders 14 are illustrated in each of the first half drum 3 and the second half drum 4.

Similarly, the arm base portion 12 extends annularly to surround an outer periphery of the drum mechanism 2 once, but here, a cross section of the arm base portion 12 is illustrated due to simplification of the illustration of the arm 13 and the cylinder 14.

As above, in the tire molding device 100 according to the present embodiment, the drum mechanism 2 includes the first half drum 3 fixed on one end side (the tip side) of the spindle 1, and the second half drum 4 that is not supported by the spindle and is connected to the spindle 1 closer to the other end side (the root side) of the spindle 1 than the first half drum 3, the spindle 1 moves along the axial direction of the spindle 1, and the second half drum 4 moves relative to the spindle 1 along the axial direction of the spindle 1.

In this configuration, as compared with a conventional configuration, a structure of the tire molding device can be further simplified, and centering accuracy can be improved.

Specifically, in a conventional tire molding device, a shaft member is provided to extend across one end and the other end of a spindle, and a first half drum and a second half drum are connected to the shaft member in order to relatively move each of a first half drum disposed on one end side of the spindle and a second half drum disposed on the other end side of the spindle relative to the spindle.

On the other hand, in the tire molding device 100 according to the present embodiment, the spindle 1, to which the first half drum 3 is fixed, moves along the axial direction of the spindle 1, and correspondingly the second half drum 4 moves relative to the spindle 1, so that shaft members heretofore arranged to move the first half drum 3 along the axial direction of the spindle 1 can be omitted.

Furthermore, in the tire molding device 100 according to the present embodiment, the second half drum 4 is not supported by the spindle 1 but is connected to the spindle 1. Specifically, the second half drum 4 is connected to the spindle 1 in the slidable contact manner to move on the spindle 1 in the axial direction of the spindle 1, but the load of the second half drum 4 is not applied to the spindle 1. Therefore, in the tire molding device 100 according to the present embodiment, as compared with the conventional tire molding device, the load onto the spindle 1 is reduced, and deflection in the spindle 1 is suppressed, so that the centering accuracy can be improved.

Additionally, in the tire molding device 100 according to the present embodiment, the second half drum 4 includes the bearing (slide bearing) 7, and is connected to the spindle 1 via the bearing 7 to support the spindle 1. That is, an own weight of the spindle 1 and the load of the first half drum 3 are supported not only by an end portion of one end side of the spindle 1 supported on the base 5 but also by the second half drum 4. In this way, the deflection in the spindle 1 is further suppressed, and hence the centering accuracy can be further improved.

Furthermore, in the tire molding device 100 according to the present embodiment, the spindle 1 rotates about the axis A of the spindle 1, and by the rotation of the spindle 1, the first half drum 3 fixed to the spindle 1 can rotate about the axis A of the spindle 1.

Additionally, in the tire molding device 100 according to the present embodiment, at least a part of the second half drum 4 (in the present embodiment, the drum body 4B and the drum cylindrical part 4T) rotates about the axis A of the spindle 1 in synchronization with the rotation of the spindle 1.

According to this configuration, the second half drum 4 can be synchronized with the rotation of the first half drum 3 fixed to the spindle 1. Furthermore, in this case, a number of shaft members decreases as compared with case where the spindle 1 and the second half drum 4 are individually rotated, so that the structure of the device can be further simplified.

Furthermore, the tire molding device 100 according to the present embodiment further includes the first shaft member (in the present embodiment, the right-left ball screw) 6 on the outer peripheral side of the spindle 1, and the spindle 1 and the second half drum 4 move opposite to each other along the axial direction of the spindle 1 via the first shaft member 6.

According to this configuration, the number of the shaft members decreases as compared with a configuration where the spindle 1 and the second half drum 4 are moved by separate members, so that the structure of the device can be further simplified.

Additionally, as in the tire molding device 100 according to the present embodiment, in case where both the spindle 1 and the second half drum 4 are connected to the first shaft member 6 on the other end side of the spindle 1 (the root side of the spindle 1), i.e., in case where the connected positions for the first shaft member 6 of the spindle 1 and that of the second half drum 4 are close to each other, a length of the first shaft member 6 shortens, and hence the structure of the device can be further simplified.

Furthermore, the first shaft member 6 is present on the outer peripheral side (in the outer part) of the spindle 1 (i.e., the shaft member to relatively move the first half drum 3 and the second half drum 4 along the axial direction of the spindle 1 is not present inside the spindle 1), and hence an interior of the spindle 1 can be hollow. In this case, various functions can be added to the tire molding device by providing a given mechanism in a hollow portion of the spindle 1.

For example, if an imaging unit (e.g., an inner surface detecting camera or the like) for imaging an inner peripheral surface of the unvulcanized tire is inserted in the hollow portion of the spindle 1, inner surface inspection of a raw tire can be performed, which can be useful in early finding defective products. Note that in this case, a hole, a slit or the like through which the above imaging unit is to be passed is provided in a portion of the spindle 1 between the first half drum 3 and the second half drum 4.

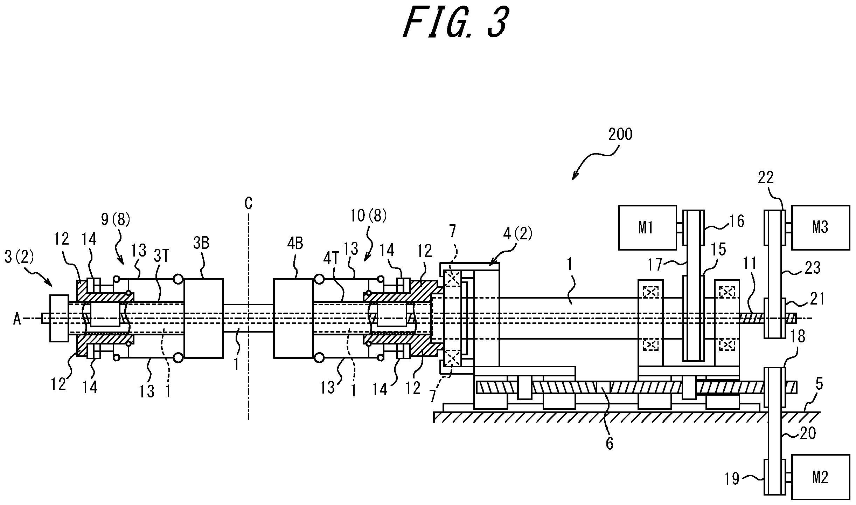

Furthermore, FIG. 3 illustrates a tire molding device 200 according to another embodiment of the present disclosure. The same configurations as in the tire molding device 100 are denoted with the same reference signs, and description thereof is omitted.

A first arm part 9 and a second arm part 10 in the tire molding device 200 are connected to a third driving source M3 that moves the first arm part 9 and the second arm part 10 relative to a drum mechanism 2 along an axial direction of a spindle 1, and by a driving force of the third driving source M3, the first arm part 9 and the second arm part 10 move along the axial direction of the spindle 1.

More specifically, the tire molding device 200 includes, in a hollow portion of the spindle 1, a second shaft member (in the present embodiment, a right-left ball screw) 11 extending in the axial direction of the spindle 1. The first arm part 9 and the second arm part 10 are connected to the third driving source M3 via the second shaft member 11, and upon rotation of the second shaft member 11 by the driving force of the third driving source M3, following the rotation, the first arm part 9 moves relative to a first half drum 3 along the axial direction of the spindle 1, and a second arm part 10 moves relative to a second half drum 4 along the axial direction of the spindle 1.

Note that as described above, the second shaft member 11 in the present embodiment is the right-left ball screw, and threads are provided in opposite orientations on one end side and the other end side of the second shaft member 11. The first arm part 9 and the second arm part 10 are connected to the second shaft member 11 at a position where the orientations of the threads are different from each other, and hence upon the rotation of the second shaft member 11, the arm parts follow the rotation to move opposite to each other along the axial direction of the spindle 1.

In this way, the first arm part 9 and the second arm part 10 move close to and away from each other along the axial direction of the spindle 1.

Note that in the present embodiment, the threads of the second shaft member 11 are provided in the opposite orientations on one end side and the other end side of the second shaft member 11, but the threads have an identical thread arrangement pitch. Therefore, the first arm part 9 and the second arm part 10 move by an equal distance in opposite directions mutually along the axial direction of the spindle 1.

According to this configuration, an arm mechanism 8 can be motorized. That is, a tire member folding step of folding back an unvulcanized tire member (not illustrated) can be motorized, and this can decrease defective products in the folding step.

Furthermore, in the above tire molding device 100 and 200, by rotation of an annular rubber belt 17 hung over a ring 15 provided in an end portion of the spindle 1 on a root side and a ring 16 provided in an end portion of a first driving source M1 on the root side, a driving force of the first driving source M1 is transmitted to the spindle 1, and the spindle 1 rotates about an axis A.

Similarly, by rotation of an annular rubber belt 20 hung over a ring 18 provided in an end portion of a first shaft member 6 on the root side of the spindle 1 and a ring 19 provided in a tip portion of a second driving source M2, a driving force of the second driving source M2 is transmitted to the first shaft member 6, and the first shaft member 6 rotates.

Furthermore, by rotation of an annular rubber belt 23 hung over a ring 21 provided in an end portion of the second shaft member 11 on the root side of the spindle 1 and a ring 22 provided in a tip portion of a third driving source M3, a driving force of the third driving source M3 is transmitted to the second shaft member 11, and the second shaft member 11 rotates.

However, in the present disclosure, a drive unit that drives the spindle 1, the first shaft member 6 and the second shaft member 11 is not limited to the above aspect.

### REFERENCE SIGNS LIST

- 1: spindle
- 1S: spindle support
- 2: drum mechanism
- 3: first half drum
- 3B: drum body
- 3T: drum cylindrical part
- 4: second half drum
- 4B: drum body
- 4T: drum cylindrical part
- 4S: drum support
- 5: base
- 6: first shaft member
- 7: bearing
- 8: arm mechanism
- 9: first arm part
- 10: second arm part
- 11: second shaft member
- 12: arm base portion
- 13: arm
- 14: cylinder
- 15, 16, 18, 19, 21 and 22: ring
- 17, 20 and 23: annular rubber belt
- A: axis of the spindle
- M1: first driving source
- M2: second driving source
- M3: third driving source
- 100 and 200: tire molding device

## Claims

1. A tire molding device to mold an unvulcanized tire, comprising a spindle, and a drum mechanism disposed on an outer peripheral side of the spindle,
wherein the drum mechanism includes a first half drum fixed on one end side of the spindle, and **characterised by**
a second half drum that is not supported by the spindle and is connected to the spindle closer to another end side of the spindle than the first half drum, and
the spindle moves along an axial direction of the spindle, and the second half drum moves relative to the spindle along the axial direction of the spindle.

2. The tire molding device according to claim 1, wherein the spindle rotates about an axis of the spindle.

3. The tire molding device according to claim 2, wherein at least a part of the second half drum rotates about an axis of the spindle in synchronization with rotation of the spindle.

4. The tire molding device according to any one of claims 1 to 3, further comprising a first shaft member on the outer peripheral side of the spindle, wherein the spindle and the second half drum move opposite to each other along the axial direction of the spindle via the first shaft member.

5. The tire molding device according to any one of claims 1 to 4, wherein the second half drum comprises a bearing, and is connected to the spindle via the bearing to support the spindle.

## Patentansprüche

1. Reifenformvorrichtung zum Formen eines unvulkanisierten Reifens, umfassend eine Spindel und einen Trommelantrieb, der an einer äußeren Umfangsseite der Spindel angeordnet ist,
wobei der Trommelantrieb eine erste Halbtrommel einschließt, die an einer Endseite der Spindel befestigt ist, und **gekennzeichnet durch**
eine zweite Halbtrommel, die nicht von der Spindel getragen wird und mit der Spindel näher an einer anderen Endseite der Spindel als die erste Halbtrommel verbunden ist, und
wobei sich die Spindel entlang einer axialen Richtung der Spindel bewegt und sich die zweite Halbtrommel relativ zur Spindel entlang der axialen Richtung der Spindel bewegt.

2. Reifenformvorrichtung nach Anspruch 1, wobei sich die Spindel um eine Spindelachse dreht.

3. Reifenformvorrichtung nach Anspruch 2, wobei sich mindestens ein Teil der zweiten Halbtrommel synchron zur Drehung der Spindel um eine Spindelachse dreht.

4. Reifenformvorrichtung nach einem der Ansprüche 1 bis 3, ferner ein erstes Wellenelement an der äußeren Umfangsseite der Spindel umfassend, wobei sich die Spindel und die zweite Halbtrommel über das erste Wellenelement entlang der axialen Richtung der Spindel entgegengesetzt zueinander bewegen.

5. Reifenformvorrichtung nach einem der Ansprüche 1 bis 4, wobei die zweite Halbtrommel ein Lager umfasst und über das Lager mit der Spindel verbunden ist, um die Spindel zu stützen.

## Revendications

1. Dispositif de moulage de pneumatique pour mouler un pneumatique non vulcanisé, comprenant une broche et un mécanisme à tambour disposé sur un côté périphérique extérieur de la broche,
dans lequel le mécanisme à tambour inclut un premier demi-tambour fixé sur un côté d'extrémité de la broche, et **caractérisé par**
un deuxième demi-tambour qui n'est pas supporté par la broche et est relié à la broche plus près d'un autre côté d'extrémité de la broche que le premier demi-tambour, et
la broche se déplace le long d'une direction axiale de la broche, et le deuxième demi-tambour se déplace par rapport à la broche le long de la direction axiale de la broche.

2. Dispositif de moulage de pneumatique selon la revendication 1, dans lequel la broche tourne autour d'un axe de la broche.

3. Dispositif de moulage de pneumatique selon la revendication 2, dans lequel au moins une partie du deuxième demi-tambour tourne autour d'un axe de la broche en synchronisation avec la rotation de la broche.

4. Dispositif de moulage de pneumatique selon l'une quelconque des revendications 1 à 3, comprenant en outre un premier élément d'arbre sur le côté périphérique extérieur de la broche, dans lequel la broche et le deuxième demi-tambour se déplacent face à face le long de la direction axiale de la broche par l'intermédiaire du premier élément d'arbre.

5. Dispositif de moulage de pneumatique selon l'une quelconque des revendications 1 à 4, dans lequel le deuxième demi-tambour comprend un palier et est relié à la broche par l'intermédiaire du palier pour supporter la broche.
